Europäisches Patentamt

European Patent Office

Office européen des brevets

(11) Numéro de publication: **0 327 150**
**A2**

## DEMANDE DE BREVET EUROPEEN

(21) Numéro de dépôt: 89200129.8

(22) Date de dépôt: 23.01.89

(51) Int. Cl.⁴: **F23D 14/66 , F23D 14/62**

(30) Priorité: 01.02.88 BE 8800122

(43) Date de publication de la demande:
**09.08.89 Bulletin 89/32**

(84) Etats contractants désignés:
**AT BE CH DE ES FR GB GR IT LI LU NL SE**

(71) Demandeur: **GEROFINA S.A.**
**Boulevard de la Foire 30**
**L-1528 Luxembourg(LU)**

(72) Inventeur: **Lambert, Albert**
**Le Val 18**
**B-5290 Clavier(BE)**

(74) Mandataire: **Pieraerts, Jacques et al**
**Bureau Gevers S.A. rue de Livourne 7 bte 1**
**B-1050 Bruxelles(BE)**

(54) Conduit d'un corps de chauffe et paroi de corps de chauffe comportant plusieurs de ces conduits.

(57) L'invention concerne un conduit d'un corps de chauffe permettant d'augmenter le rendement calorifique d'un mélange carburant/comburant constitué par des moyens tels que des chicanes (5, 6) qui agissent, par un processus mécanique, sur l'oxydation des gaz chauds circulant dans le conduit en imprimant à ceux-ci des contraintes de frottement suffisamment élevées pour échauffer le matériau dont est constitué le conduit et augmenter ainsi la température du mélange carburant/comburant à mesure que celui-ci se rapproche de la sortie du conduit.

Fig.1.

EP 0 327 150 A2

L'invention concerne un conduit d'un corps de chauffe permettant d'augmenter le rendement calorifique d'un mélange carburant/comburant circulant dans celui-ci en agissant au préalable sur la structure de ce mélange de manière en élever la température.

Le but de l'invention d'optimaliser les conditions dans lesquelles un mélange carburant/comburant circule dans une conduite avant de s'enflammer, par un phénomène de post-combustion dans un corps de chauffe de type quelconque.

Pour réaliser cet objectif conformément à l'invention, le conduit du corps de chauffe selon l'invention, est constitué par des moyens tels que des chicanes qui agissent, par un processus mécanique, sur l'oxydation des gaz chauds circulant dans le conduit en imprimant à ceux-ci des contraintes de frottement suffisamment élevées pour échauffer le matériau dont est constitué le conduit et augmenter ainsi la température du mélange carburant/comburant à mesure que celui-ci se rapproche de la sortie du conduit.

Toujours selon l'invention, les chicanes précitées sont calculées de manière que les gaz chauds soient portés à une température suffisante pour qu'un phénomène de postcombustion ne se produise qu'au moment où les gaz chauds s'échappent du conduit précité.

Une particularité de l'invention réside dans le fait que la distance séparant les parois, entre lesquelles les gaz chauds circulent dans le conduit, est suffisamment réduite pour empêcher les gaz chauds de s'enflammer avant leur détente à la sortie du conduit.

Dans une forme de réalisation avantageuse de l'invention les chicanes précitées sont orientées de telle sorte que chaque chicane comporte une aile qui s'étend d'un côté du conduit jusqu'à proximité du côté opposé, les ailes des deux chicanes successives étant incurvées, en considérant le sens dans lequel se déplacent les gaz chauds, de telle sorte que l'aile de l'une des chicanes est incurvée dans le sens de déplacement des gaz et l'aile de l'autre chicane, adjacente à la chicane précédente, est incurvée dans le sens opposé afin de réaliser un frein maximal au déplacement des gaz chauds.

Dans une forme de réalisation particulièrement avantageuse et de réalisation simple, les chicanes précitées sont formées à l'intérieur d'éléments indépendants constitutifs du conduit précité.

Toujours selon l'invention, il est prévu, dans chaque élément constitutif du conduit, au moins une entrée d'air secondaire.

Un détail remarquable de l'invention réside dans le fait qu'entre certains des éléments précités constitutifs du conduit sont disposés dans éléments ne participant pas à la formation d'une chicane, éléments qui sont considérés comme des éléments neutres, en matière réfractaire, dans le but d'augmenter la température des gaz circulant dans le conduit.

D'autre détails et avantages de l'invention ressortiront de la description qui sera donnée ci-après d'un conduit d'un corps de chauffe selon l'invention. Cette description n'est donnée qu'à titre illustratif et ne limite pas l'invention. Les notations de référence se rapportent aux figures ci-jointes.

La figure 1 est une vue selon une section longitudinale d'un conduit selon l'invention.

La figure 2 illustre le comportement du mélange circulant dans le conduit selon l'invention.

Le conduit, représenté par ces figures, peut, selon les besoins, avoir une section carrée ou circulaire sans que ceci ne modifie en rien le principe de fonctionnement du conduit d'un corps de chauffe selon l'invention.

En pratique, plusieurs conduits forment une paroi du corps de chauffe. Le corps de chauffe peut donc être constitué par un ensemble de conduits du type décrit dans le cadre de la présente demande de brevet.

Pour faire pleinement usage de ce qu'il est convenu d'appeler "effet de paroi" les dimensions internes d'un conduit, c.à.d. la distance séparant deux parois opposées d'un conduit, ont été calculées avec précision. Lorsque le conduit est réalisé en acier résistant aux températures élevées ( + 1200° C) cette distance ne peut être supérieure à 25 mm. Lorsque le conduit est réalisé en céramique réfractaire, cette même distance ne doit pas être supérieure à 10 mm.

Chaque conduit présente un nombre de chicanes destinées à agir en tant que frein et présente, selon le sens dans lequel se déplacent les gaz chauds, une section telle que ces gaz subisent d'importantes contraintes qui provoquent leur échauffement, de telle sorte qu'à la sortie du conduit, ils s'enflamment par post-combustion.

Cet objectif est atteint en réalisant le conduit, designé par la référence générale 1, à l'aide de divers éléments constitutifs du conduit qui seront désignés par les références 2 et 3 quoique, en réalité, ces éléments 2 et 3 soient de même structure.

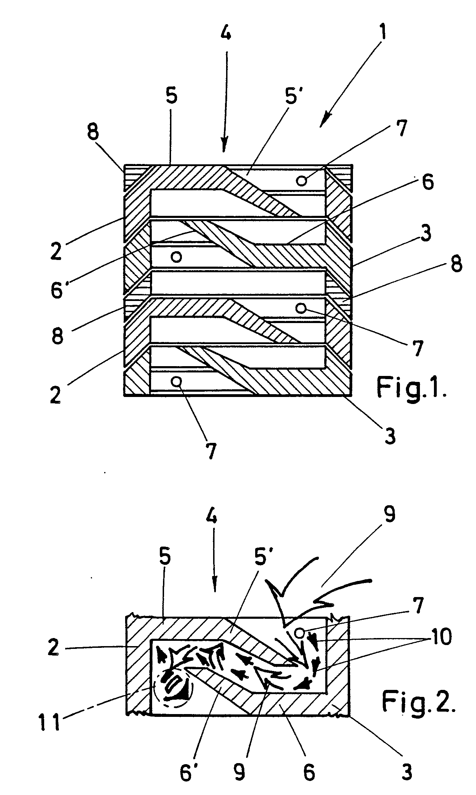

Si l'on considère le sens dans lequel circulent les gaz chauds au travers du conduit, tel qu'illustré par la flèche 4, tant à la figure 1 qu'à la figure 2, on remarque que le conduit 1 est réalisé par une succession d'éléments 2 et 3. Les éléments 2 présentent une chicane 5 munie d'une aile 5' qui s'incurve dans le sens dans lequel circulent les gaz chauds.

Les éléments 3 présentent des chicanes 6 dont l'aile 6' s'incurve dans le sens opposé.

On a désigné par la référence 7 des orifices d'admission d'air secondaire qui apparaissent tant dans les éléments 2 que dans les éléments 3. Il est évident que le nombre et la section de ces orifices d'admission d'air secondaire sont parfaitement facultatifs et peuvent être établis en fonction de paramètres bien déterminés.

A certains endroits, certains éléments 2 sont séparés des éléments 3 par des entretoises neutres 8 en matériau réfractaire, une partie d'une telle entretoise neutre est visible au sommet de la figure 1.

Le mélange carburant/comburant, pulsé ou aspiré au travers d'un conduit du type décrit, est considérablement freiné, ce qui provoque des contraintes importantes de frottement à l'intérieur du conduit, ce qui échauffe fortement le matériau réfractair dont est réalisé le conduit. Ce frottement est considéré comme étant un processus mécanique déclenchant la réaction chimique désirée, c.à.d l'oxydation du mélange carburant/comburant contenant également les imbrûlés.

Les éléments constitutifs du conduit présentant les chicanes décrites ci-dessus et illustrés par les figures 1 et 2 s'échauffent progressivement en direction de l'endroit où les gaz constituant le mélange carburant/comburant se détendent à l'entrée du corps de chauffe et s'enflamment par postcombustion.

A la figure 2 qui représente la combinaison de deux éléments 2 et 3, présentant, chacun, une chicane 5, 6 le circuit des gaz représentés par les flèches 9 constitue le circuit des gaz dits "imbrûlés". Les flèches 10 représentent, au contraire, le circuit des gaz comburants ou carburants qui finissent par donner lieu à un prémélange intime des divers constituants gazeux désignés par la référence générale 11. L'opération qui consiste à prémélanger dans les meilleures conditions possibles le carburant et le comburant, avec adjonction d'air secondaire, peut se renouveler plus au moins fréquemment selon que le conduit comporte plus au moins de chicanes. Le nombre de chicanes est déterminé par les caractéristiques du mélange carburant/comburant qui doit être totalement ou partiellement oxydé ou enflammé.

La demanderesse signale que l'état actuel de la science en matière de thermodynamique des fluides, ne permet pas de déterminer un mode de calcul rigoureux qui, tenant compte du diamètre, de la forme ou de la section des éléments constitutifs du conduit et des chicanes, garantirait un résultat dont les limites souhaitables seraient connues d'avance.

L'invention n'est évidemment pas limitée à la forme d'exécution qui vient d'être décrite et bien des modifications pourraient y être apportées sans sortir du cadre de la présente demande de brevet.

## Revendications

1. Conduit d'un corps de chauffe permettant d'augmenter le rendement calorifique d'un mélange carburant/comburant circulant dans celui-ci en agissant au préalable sur la structure de ce mélange de manière à en élever la température, caractérisé en ce qu'il est constitué par des moyens tels que des chicanes (5, 6) qui agissent, par un processus mécanique, sur l'oxydation des gaz chauds circulant dans le conduit en imprimant à ceux-ci des contraintes de frottement suffisamment élevées pour échauffer le matériau dont est constitué le conduit et augmenter ainsi la température du mélange carburant/comburant à mesure que celui-ci se rapproche de la sortie du conduit.

2. Conduit selon la revendication 1, caractérisé en ce que les chicanes (5, 6) sont calculées de manière que les gaz chauds soient portés à une température suffisante pour qu'un phénomène de postcombustion ne se produise qu'au moment où les gaz chauds s'échappent du conduit précité.

3. Conduit selon l'une quelconque des revendications 1 et 2, caractérisé en ce que la distance interne séparant deux parois se faisant face dans le conduit n'est pas supérieure à 25 mm lorsque le conduit est réalisé en acier.

4. Conduit selon l'une quelconque des revendications 1 et 2, caractérisé en ce que la distance interne séparant deux parois se faisant face dans le conduit n'est pas supérieure à 10 mm lorsque le conduit est réalisé en céramique réfractaire.

5. Conduit selon l'une quelconque des revendications 1 - 4, caractérisé en ce que les chicanes précitées (5, 6) sont orientées de telle sorte que chaque chicane comporte une aile (5', 6') qui s'étend d'un côté du conduit jusqu'à proximité du côté opposé.

6. Conduit selon la revendication 1, caractérisé en ce que les ailes (5', 6') de deux chicanes successives (5, 6) sont incurvées, en considérant le sens dans lequel se déplacent les gaz chauds, de telle sorte que l'aile (6') de l'une des chicanes est incurvée dans le sens de déplacement des gaz et l'aile (3') de l'autre chicane, adjacente à la chicane précédente, est incurvée dans le sens opposé afin de réaliser un frein maximal au déplacement des gaz chauds.

7. Conduit selon l'une quelconque des revendications 1 - 6, caractérisé en ce que les chicanes (5, 6) sont formées à l'intérieur d'éléments indépendants (2, 3) constitutifs du conduit précité.

8. Conduit selon la revendication 7, caractérisé en ce que dans chaque élément constitituf (2, 3) du conduit est prévu au moins un orifice d'admission d'aire secondaire (7).

9. Conduit selon l'une quelconque des revendications 1 à 8, caractérisé en ce qu'entre certains des éléments (2, 3) constitutifs du conduit sont prévues des entretoises neutres (8) en matière céramique. c.à.d. des éléments ne comportant pas de chicanes.

10. Paroi d'un corps de chauffe comportant une pluralité de conduit selon l'une quelconque des revendications 1 à 9.

Fig.1.

Fig.2.